# EUROPEAN PATENT SPECIFICATION

(11) **EP 4 261 938 B1**
(45) Date of publication and mention of the grant of the patent: **28.01.2026**
(21) Application number: 21911378.4
(22) Date of filing: 15.12.2021
(51) Int. Cl.: H01M 4/36, H01M 4/525, H01M 4/505, H01M 4/62, H01M 10/052, C01G 53/00, C01G 45/02

(54) **POSITIVE ELECTRODE ACTIVE MATERIAL FOR LITHIUM SECONDARY BATTERY, METHOD FOR PREPARING THE SAME, AND POSITIVE ELECTRODE AND LITHIUM SECONDARY BATTERY COMPRISING THE SAME**
POSITIVELEKTRODENAKTIVMATERIAL FÜR LITHIUMSEKUNDÄRBATTERIE, VERFAHREN ZUR HERSTELLUNG DAVON UND POSITIVELEKTRODE UND LITHIUMSEKUNDÄRBATTERIE DAMIT
MATÉRIAU ACTIF D'ÉLECTRODE POSITIVE POUR BATTERIE SECONDAIRE AU LITHIUM, SON PROCÉDÉ DE PRÉPARATION, ET ÉLECTRODE POSITIVE ET BATTERIE SECONDAIRE AU LITHIUM LE COMPRENANT

(30) Priority: 24.12.2020 KR 20200183835
(43) Date of publication of application: 18.10.2023
(73) Proprietor: LG Energy Solution, Ltd., Seoul 07335 (KR)
(72) Inventor: LHO, Eun-Sol, Daejeon 34122 (KR); DO, Joong-Yeop, Daejeon 34122 (KR); PARK, Kang-Joon, Daejeon 34122 (KR); HAN, Gi-Beom, Daejeon 34122 (KR); KWAK, Min, Daejeon 34122 (KR); PARK, Sang-Min, Daejeon 34122 (KR); LEE, Dae-Jin, Daejeon 34122 (KR); LEE, Sang-Wook, Daejeon 34122 (KR); JUNG, Wang-Mo, Daejeon 34122 (KR)
(74) Representative: Hoffmann Eitle
(86) International application number: PCT/KR2021/019109
(87) International publication number: WO 2022/139311

(56) References cited:
- EP-A1- 4 203 100
- CN-A- 105 185 962
- CN-A- 105 958 062
- KR-A- 20180 111 552
- KR-A- 20190 059 249
- KR-A- 20200 046 749
- KR-A- 20200 056 953
- KR-A- 20200 125 442
- KR-B1- 101 676 434

## Description

### TECHNICAL FIELD

The present disclosure relates to a method for preparing a positive electrode active material for a lithium secondary battery comprising primary macro particles of high-Ni lithium transition metal oxide.

### BACKGROUND ART

Recently, with the widespread use of electronic devices using batteries, for example, mobile phones, laptop computers and electric vehicles, there is a fast growing demand for secondary batteries with small size, light weight and relatively high capacity. In particular, lithium secondary batteries are gaining attention as a power source for driving mobile devices due to their light weight and high energy density advantages. Accordingly, there are many efforts to improve the performance of lithium secondary batteries.

A lithium secondary battery includes an organic electrolyte solution or a polymer electrolyte solution filled between a positive electrode and a negative electrode made of an active material capable of intercalating and deintercalating lithium ions, and electrical energy is produced by oxidation and reduction reactions during intercalation/deintercalation of lithium ions at the positive electrode and the negative electrode.

The positive electrode active material of the lithium secondary battery includes lithium cobalt oxide (LiCoO₂), nickel-based lithium transition metal oxide, lithium manganese oxide (LiMnO₂ or LiMn₂O₄) and a lithium iron phosphate compound (LiFePO₄). Among them, lithium cobalt oxide (LiCoO₂) is widely used due to its high operating voltage and large capacity advantages, and is used as a positive electrode active material for high voltage. However, cobalt (Co) has a limitation on the use in a large amount as a power source in the field of electric vehicles due to its price rise and unstable supply, and thus there is a need for development of an alternative positive electrode active material.

Accordingly, nickel-based lithium transition metal oxide with partial substitution of nickel (Ni) for cobalt (Co) has been developed and its typical example is nickel cobalt manganese based lithium composite transition metal oxide (hereinafter simply referred to as 'NCM-based lithium composite transition metal oxide').

Meanwhile, the conventionally developed nickel-based lithium transition metal oxide is in the form of a secondary particle formed by agglomeration of primary micro particles having a small average particle size D50, and has a large specific surface area and low particle strength. Accordingly, when the positive electrode active material comprising the secondary particle formed by agglomeration of primary micro particles is used to manufacture an electrode, followed by a rolling process, particle cracking is severe and a large amount of gas is produced during the cell operation, resulting in low stability. In particular, high-Ni lithium transition metal oxide having higher nickel (Ni) content to ensure high capacity has lower chemical stability and is difficult to ensure thermal stability due to the above-described structural problem.

To overcome the disadvantage of the above-described conventional nickel-based lithium transition metal oxide in the form of the secondary particle formed by agglomeration of primary micro particles, suggestion has been made on a nickel-based lithium transition metal oxide positive electrode active material in the form of a secondary particle formed by agglomeration of primary macro particles having a large average particle size D50.

The nickel-based lithium transition metal oxide positive electrode active material in the form of the secondary particle formed by agglomeration of primary macro particles solves the problem with thermal stability, lifespan reduction caused by side reactions during electrochemical reactions and gas generation due to the minimized interface of the secondary particle.

Meanwhile, in general, high-Ni lithium transition metal oxide positive electrode active material undergoes a washing process to reduce the amount of lithium impurities remaining on the surface. Since the washing process removes lithium by-products on the surface, it is possible to reduce the gas generation, but the surface of the positive electrode active material particles may be damaged, so it is not good for the lifespan. In particular, the nickel-based lithium transition metal oxide positive electrode active material in the form of the secondary particle formed by agglomeration of primary macro particles has intrinsic low output performance, and after the washing process, the output reduces, and the resistance also increases during charging/discharging.

CN 105185962A describes a high-nickel cathode material, which comprises a base material and a lithium cobaltate layer that coats the surface of the base material. The high-nickel cathode material comprises the lithium cobaltate layer; the lithium cobaltate layer can interact with the residual lithium on the surface of the base material, so that the alkali content of the surface of the high-nickel cathode material is relatively low.

CN 105958062A describes a polycrystal high-nickel positive electrode material that comprises a base material with a layered structure and a coating layer which is arranged outside the base material and has a spinel structure; the general formula of the base material is LiₐNi_{1-x-y}CoₓM_{y}O², wherein M is at least one kind of Mn and Al; the coating layer is lithium manganese oxide; the mass percentage of the total impurity lithium on the surface of the base material is less than 0.085% based on the total mass percentage of the base material; the preparation method for the positive electrode material comprises the following steps of weighing nickel-cobalt-metal hydroxide precursor and mixing with a lithium source, then carrying out thermal treatment, cooling, crushing and sieving to obtain the base material; measuring the content of the residual impurity Li₂CO₃ and LiOH on the surface of the base material, adding into the metal Mn compound according to the measurement result, and carrying out low-temperature thermal treatment in an oxygen atmosphere to obtain the polycrystal high-nickel positive electrode material used for the lithium ion battery.

EP 4203100A1 describes a positive electrode active material comprising at least one secondary particle comprising an agglomerate of primary macro particles, a method for preparing the same and a lithium secondary battery comprising the same.

### DISCLOSURE

### Technical Problem

According to the present disclosure, there is provided a method for preparing a nickel-based lithium transition metal oxide positive electrode active material in a form of a secondary particle formed by agglomeration of primary macro particles with low resistance during charging/discharging and improved output characteristics.

### Technical Solution

The present disclosure provides a method for preparing a positive electrode active material for a lithium secondary battery.

The positive electrode active material for a lithium secondary battery comprises a secondary particle having an average particle size D50 of 2 to 8 µm formed by agglomeration of at least two primary macro particles having an average particle size D50 of 0.5 to 3 µm and wherein an average crystal size of the primary macro particle is equal to or larger than 200 nm; and a coating layer of lithium-metal oxide formed on a surface of the secondary particle, wherein the primary particle is represented by LiₐNi_{1-b-c-4}Co_{b}Mn_{c}Q_{q}O_{2+δ} wherein 1.0≤a≤1.5, 0<b<0.2, 0<c<0.2, 0≤d≤0.1, 0<b+c+d≤0.2, -0.1≤δ≤1.0, and Q is at least one type of metal selected from the group consisting of Al, Mg, V, Ti and Zr, a metal of the lithium-metal oxide is at least one type of metal selected from the group consisting of manganese, nickel, vanadium and cobalt, and an amount of lithium impurities is 0.25 weight% or less as determined below.

The metal of the lithium-metal oxide may be least one selected from the group consisting of manganese and cobalt.

The average particle size D50 of the primary macro particle may be 0.5 to 2 µm, and more specifically, 0.8 to 1.5 µm.

The average particle size D50 of the secondary particle may be 3 to 6 µm.

An amount of metal oxide except lithium in the lithium-metal oxide may be 0.1 to 10 parts by weight based on 100 parts by weight of the primary particles.

The method for preparing the positive electrode active material for a lithium secondary battery, comprises: (S1) preparing a secondary particle having an average particle size D50 of 2 to 8 µm formed by agglomeration of at least two primary macro particles represented by LiₐNi_{1-b-c-d}Co_{b}Mn_{c}Q_{d}O_{2+δ} wherein 1.0≤a≤1.5, 0<b<0.2, 0<c<0.2, 0≤d≤0.1, 0<b+c+d≤0.2, -0.1≤δ≤1.0, and Q is at least one type of metal selected from the group consisting of Al, Mg, V, Ti and Zr, and having an average particle size D50 of 0.5 to 3 µm, and wherein an average crystal size of the primary macro particle is equal to or larger than 200 nm; and (S2) mixing the secondary particle with an oxide of at least one type of metal selected from the group consisting of manganese, nickel, vanadium and cobalt and sintering to form a coating layer of lithium-metal oxide on a surface of the secondary particle by reaction between lithium impurities contained on a surface of the secondary particle and the metal oxide, wherein the method does not comprise a washing process between the steps (S1) and (S2).

The metal oxide may be at least one selected from the group consisting of Mn₃O₄, Mn₂O₃, MnO₂, NiO, NiO₂, V₂O₅, VO₂, Co₂O₃ and Co₃O₄.

The metal oxide may be at least one selected from the group consisting of Mn₃O₄ and Co₃O₄.

An amount of the metal oxide mixed in the step (S2) may be 0.1 to 10 parts by weight based on 100 parts by weight of the primary particles.

A positive electrode for a lithium secondary battery may be prepared with the positive electrode active material.

A lithium secondary battery may be prepared with the positive electrode.

### Advantageous Effects

According to an embodiment of the present disclosure, it is possible to improve the output characteristics of a lithium secondary battery comprising a nickel-based lithium transition metal oxide positive electrode active material in the form of a secondary particle formed by agglomeration of primary macro particles due to low resistance during charging/discharging.

### DESCRIPTION OF DRAWINGS

The accompanying drawing illustrates a preferred embodiment of the present disclosure, and together with the above description, serves to help a further understanding of the technical aspects of the present disclosure, so the present disclosure should not be construed as being limited to the drawing. Meanwhile, the shape, size, scale or proportion of the elements in the accompanying drawing may be exaggerated to emphasize a more clear description.

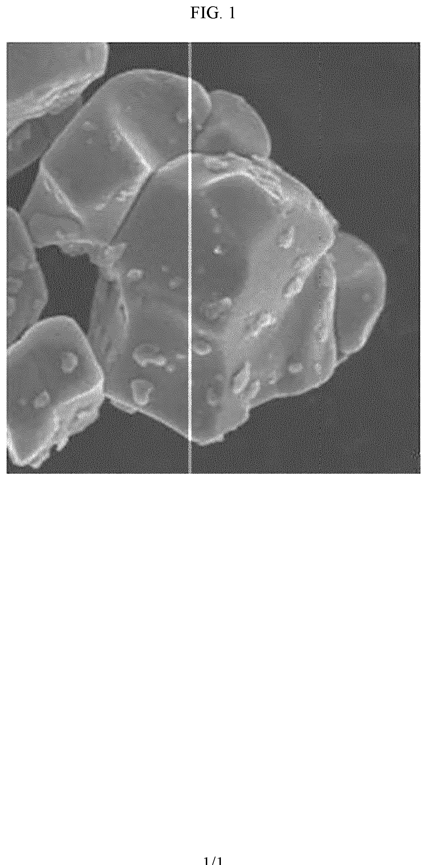

FIG. 1 is a scanning electron microscopy (SEM) image of a positive electrode active material particle according to example 1.

### BEST MODE

Hereinafter, embodiments of the present disclosure will be described in detail. The present invention is directed to a method for preparing a positive electrode active material for a lithium secondary battery and preferred embodiments of the positive electrode active material obtainable by that method are also described, as are the positive electrode and lithium secondary battery that can be prepared with said positive electrode active material. Prior to the description, it should be understood that the terms or words used in the specification and the appended claims should not be construed as limited to general and dictionary meanings, but interpreted based on the meanings and concepts corresponding to technical aspects of the present disclosure, on the basis of the principle that the inventor is allowed to define terms appropriately for the best explanation.

Unless the context clearly indicates otherwise, it will be understood that the term "comprises" when used in this specification, specifies the presence of stated elements, but does not preclude the presence or addition of one or more other elements.

In the specification and the appended claims, "comprising multiple crystal grains" refers to a crystal structure formed by two or more crystal grains having a specific range of average crystal sizes. In this instance, the crystal size of the crystal grain may be quantitatively analyzed using X-ray diffraction analysis (XRD) by Cu Kα X-ray (Xrα). Specifically, the average crystal size of the crystal grain may be quantitatively analyzed by putting a prepared particle into a holder and analyzing diffraction grating for X-ray radiation onto the particle.

In the specification and the appended claims, D50 may be defined as a particle size at 50% of particle size distribution, and may be measured using a laser diffraction method. For example, a method for measuring the average particle size D50 of a positive electrode active material may include dispersing particles of the positive electrode active material in a dispersion medium, introducing into a commercially available laser diffraction particle size measurement device (for example, Microtrac MT 3000), irradiating ultrasound of about 28 kHz with the output power of 60W, and calculating the average particle size D50 corresponding to 50% of cumulative volume in the measurement device.

In the present disclosure, 'primary particle' refers to a particle having seemingly absent grain boundary when observed with the field of view of 5000 to 20000 magnification using a scanning electron microscope.

In the present disclosure, 'secondary particle' is a particle formed by agglomeration of the primary particles.

In the present disclosure, 'monolith' refers to a particle that exists independently of the secondary particle, and has seemingly absent grain boundary, and for example, it is a particle having the particle diameter of 0.5 µm or more.

In the present disclosure, 'particle' may include any one of the monolith, the secondary particle and the primary particle or all of them.

According to an aspect of the present disclosure, there is provided a positive electrode active material for a lithium secondary battery comprising a secondary particle having the average particle size D50 of 1 to 10 µm formed by agglomeration of at least two primary macro particles having the average particle size D50 of 0.5 to 3 µm; and
a coating layer of lithium-metal oxide formed on a surface of the secondary particle,
wherein the primary macro particle is represented by LiₐNi_{1-b-c-d}Co_{b}Mn_{c}Q_{d}O_{2+δ} wherein 1.0≤a≤1.5, 0<b<0.2, 0<c<0.2, 0≤d≤0.1, 0<b+c+d≤0.2, -0.1≤δ≤1.0, and Q is at least one type of metal selected from the group consisting of Al, Mg, V, Ti and Zr,
a metal of the lithium-metal oxide is at least one selected from the group consisting of manganese, nickel, vanadium and cobalt, and
an amount of lithium impurities is 0.25 weight% or less.

### Primary macro particle

In general, a nickel-based lithium transition metal oxide is a secondary particle. The secondary particle may be an agglomerate of primary particles.

Specifically, a secondary particle of dense nickel-based transition metal hydroxide prepared by a coprecipitation method is used for a precursor, and the precursor is mixed with a lithium precursor and sintered at the temperature of less than 960°C, yielding a secondary particle of nickel-based lithium transition metal oxide formed by agglomeration of primary micro particles.

However, when a positive electrode active material comprising the conventional secondary particle is coated on a current collector, followed by rolling, the particle itself cracks, resulting in increased specific surface area. When the specific surface area increases, rock salt is formed on the surface and the resistance increases.

To solve the above-described problem, a monolithic positive electrode active material has been additionally developed. Specifically, as opposed to the conventional method using the above-described dense nickel-based lithium transition metal hydroxide secondary particle as a precursor, when a porous precursor rather than the conventional precursor is used, monolithic nickel-based lithium transition metal oxide that can be synthesized at low sintering temperature compared to the same nickel content and is not in the form of a secondary particle any longer may be obtained. However, when the positive electrode active material comprising the monolith is coated on the current collector, followed by rolling, the monolith itself does not crack, but the other active material cracks.

An aspect of the present disclosure is provided to solve the problem.

When sintering is performed at high sintering temperature using the existing dense precursor, the average particle size D50 of the primary particle and the average particle size D50 of the secondary particle simultaneously increase.

In contrast, the secondary particle according to an aspect of the present disclosure is different from the method for obtaining the monolith as below.

As described above, the monolith is only formed by increasing the primary sintering temperature using the existing precursor for secondary particle. In contrast, the secondary particle according to an aspect of the present disclosure uses a porous precursor. Accordingly, it is possible to grow the primary macro particle having a large particle size without increasing the sintering temperature, and by contrast, the secondary particle may grow less than the conventional art.

Accordingly, the secondary particle according to an aspect of the present disclosure has the equal or similar average particle size D50 to the conventional art and a large average particle size D50 of the primary particle. That is, as opposed to the typical configuration of the conventional positive electrode active material, i.e., in the form of a secondary particle formed by agglomeration of primary particles having a small average particle size, it is provided a secondary particle formed by agglomeration of a predetermined number or less of primary macro particles, namely, primary particles having the increased size.

When compared with primary micro particle that form the conventional secondary particle, the primary macro particle has simultaneous growth of the average particle size and the average crystal size of the primary particle.

From the perspective of crack, a seemingly absent grain boundary and a large average particle size like the monolith are advantageous. When only the average particle size D50 of the primary particle is increased by over-sintering, rock salt is formed on the surface of the primary particle and the initial resistance increases. Additionally, growing the crystal size of the primary particle together reduces the resistance.

Accordingly, in the present disclosure, the primary macro particle may be a particle having a large average particle size as well as a large average crystal size and a seemingly absent grain boundary.

As described above, the simultaneous growth of the average particle size and the average crystal size of the primary particle reduces the resistance, thereby increasing the lifespan, compared to the monolith having a large resistance increase in the presence of rock salt on the surface due to the sintering at high temperature.

As described above, compared to the monolith, the "secondary particle formed by agglomeration of primary macro particles" used in an aspect of the present disclosure is advantageous in terms of the increased size of the primary particle itself, the reduced rock salt formation, and the consequential reduced resistance.

In this instance, the average crystal size of the primary macro particle may be quantitatively analyzed using X-ray diffraction analysis (XRD) by Cu Kα X-ray. Specifically, the average crystal size of the primary macro particle may be quantitatively analyzed by putting the prepared particle into a holder and analyzing diffraction grating for X-ray radiation onto the particle.

Additionally, the average crystal size of the primary macro particle is 200 nm or more, specifically 250 nm or more, and more specifically 300 nm or more.

In a specific embodiment of the present disclosure, the average particle size D50 of the primary macro particle that forms the secondary particle is 0.5 to 3 µm. When the average particle size D50 of the primary macro particle is less than 0.5 µm, degradation occurs quickly due to the increased reaction specific surface area of the particle, and when the average particle size D50 of the primary macro particle is larger than 3 µm, the resistance increases too much. Accordingly, the average particle size D50 of the primary macro particle may be 0.5 to 2 µm, and more specifically 0.8 to 1.5 µm.

The primary macro particle is high-Ni lithium transition metal oxide, and is represented by LiₐNi_{1-b-c-d}Co_{b}Mn_{c}Q_{d}O_{2+δ} wherein 1.0≤a≤1.5, 0<b<0.2, 0<c<0.2, 0≤d≤0.1, 0<b+c+d≤0.2, -0.1≤δ≤1.0, and Q is at least one type of metal selected from the group consisting of Al, Mg, V, Ti and Zr. In the above formula, a, b, c, d and δ denote a mole ratio of each element in the nickel-based lithium transition metal oxide.

In this instance, the doped metal Q in the crystal lattice of the primary particle may be disposed on only part of the surface of the particle depending on the position preference of Q, or may be positioned with a concentration gradient that decreases in a direction from the particle surface to the center of the particle, or may be uniformly positioned over the entire particle.

### Secondary particle

The secondary particle according to an aspect of the present disclosure refers to an agglomerate of two or more primary macro particles. More specifically, the secondary particle may be an agglomerate of 2 to 30 primary macro particles. The average particle size D50 of the secondary particle is 2 to 8 µm. When the average particle size D50 of the secondary particle is less than 1 µm, degradation occurs quickly due to the increased reaction specific surface area, and when the average particle size D50 of the secondary particle is larger than 10 µm, the resistance increases too much. The average particle size D50 of the secondary particle may be 3 to 6 µm.

### Coating layer

A coating layer of lithium-metal oxide is formed on the surface of the secondary particle. Here, the coating layer may be formed on all or part or the surface of the secondary particle, and may be disposed in the gap between the primary particles, and thus in the present disclosure, the coating layer should be interpreted as including these aspects.

The metal of the lithium-metal oxide may be at least one type of metal selected from the group consisting of manganese, nickel, vanadium and cobalt, and in particular, at least one selected from the group consisting of manganese and cobalt. The lithium-metal oxide is formed by reaction between metal oxide and lithium impurities remaining on the surface of the secondary particle as described below. The coating layer may be formed in a stable spinel phase. Accordingly, even though the secondary particle is not treated through a washing process, as lithium impurities remaining on the surface are converted to lithium-metal oxide, the lithium impurity content is reduced to, for example, 0.25 weight% or less, thereby solving the output reduction problem.

As described above, as lithium impurities remaining on the surface are converted to lithium-metal oxide by the reaction with metal oxide without treatment of the secondary particle through a washing process, the lithium impurity content in the positive electrode active material is reduced down to 0.25 weight% or less, thereby solving the output reduction problem.

Accordingly, the amount of metal oxide except lithium in the lithium-metal oxide may be 0.1 to 10 parts by weight based on 100 parts by weight of the primary particles.

### Method for preparing the positive electrode active material

The positive electrode active material according to the present disclosure may be prepared by the following method. However, subject to the appended claims, the present disclosure is not limited thereto.

First, a secondary particle having the average particle size D50 of 2 to 8 µm formed by agglomeration of two or more primary macro particles represented by LiₐNi_{1-b-c-d}Co_{b}Mn_{c}Q_{d}O_{2+δ} wherein 1.0≤a≤1.5, 0<b<0.2, 0<c<0.2, 0≤d≤0.1, 0<b+c+d≤0.2, -0.1≤δ≤1.0, and Q is at least one type of metal selected from the group consisting of Al, Mg, V, Ti and Zr, and having the average particle size D50 of 0.5 to 3 µm, and wherein an average crystal size of the primary macro particle is equal to or larger than 200 nm is prepared (step S1).

Basically, the step S1 comprises mixing a nickel-based transition metal oxide precursor with a lithium precursor and sintering above a predetermined temperature, and prepares at least one secondary particle comprising an agglomerate of two or more primary macro particles through secondary sintering.

The method for preparing the secondary particle is additionally described for each step.

First, a positive electrode active material precursor comprising nickel (Ni), cobalt (Co) and manganese (Mn) is prepared.

In this instance, the precursor for preparing the positive electrode active material may be a commercially available positive electrode active material precursor, or may be prepared by a method for preparing a positive electrode active material precursor well known in the corresponding technical field.

For example, the precursor is prepared by adding an ammonium cation containing chelating agent and a basic compound to a transition metal solution comprising a nickel containing raw material, a cobalt containing raw material and a manganese containing raw material, and causing coprecipitation reaction.

The nickel containing raw material may include, for example, nickel containing acetate, nitrate, sulfate, halide, sulfide, hydroxide, oxide or oxyhydroxide, and specifically, may include at least one of Ni(OH)₂, NiO, NiOOH, NiCO₃ · 2Ni(OH)₂ · 4H₂O, NiC₂O₂ · 2H₂O, Ni(NO₃)₂ · 6H₂O, NiSO₄, NiSO₄ · 6H₂O, an aliphatic nickel salt or nickel halide, but is not limited thereto.

The cobalt containing raw material may include cobalt containing acetate, nitrate, sulfate, halide, sulfide, hydroxide, oxide or oxyhydroxide, and specifically, may include at least one of Co(OH)₂, CoOOH, Co(OCOCH₃)₂ · 4H₂O, Co(NO₃)₂ · 6H₂O, CoSO₄ or Co(SO₄)₂ · 7H₂O, but is not limited thereto.

The manganese containing raw material may include, for example, at least one of manganese containing acetate, nitrate, sulfate, halide, sulfide, hydroxide, oxide or oxyhydroxide, and specifically, may include, for example, at least one of manganese oxide such as Mn₂O₃, MnO₂, Mn₃O₄; a manganese salt such as MnCO₃, Mn(NO₃)₂, MnSO₄, manganese acetate, a manganese salt of dicarboxylic acid, manganese citrate and an aliphatic manganese salt; manganese oxyhydroxide or manganese chloride, but is not limited thereto.

The transition metal solution may be prepared by adding the nickel containing raw material, the cobalt containing raw material and the manganese containing raw material to a solvent, to be specific, water, or a mixed solvent of water and an organic solvent (for example, alcohol, etc.) that mixes with water to form a homogeneous mixture, or may be prepared by mixing an aqueous solution of the nickel containing raw material, an aqueous solution of the cobalt containing raw material and the manganese containing raw material.

The ammonium cation containing chelating agent may include, for example, at least one of NH₄OH, (NH₄)₂SO₄, NH₄NO₃, NH₄Cl, CH₃COONH₄ or (NH₄)₂CO₃, but is not limited thereto. Meanwhile, the ammonium cation containing chelating agent may be used in the form of an aqueous solution, and in this instance, the solvent may include water or a mixture of water and an organic solvent (specifically, alcohol, etc.) that mixes with water to form a homogeneous mixture.

The basic compound may include at least one of hydroxide or hydrate of alkali metal or alkaline earth metal such as NaOH, KOH or Ca(OH)₂. The basic compound may be used in the form of an aqueous solution, and in this instance, the solvent may include water, or a mixture of water and an organic solvent (specifically, alcohol, etc.) that mixes with water to form a homogeneous mixture.

The basic compound may be added to control the pH of the reaction solution, and may be added in such an amount that the pH of the metal solution is 9 to 11.

Meanwhile, the coprecipitation reaction may be performed at 40°C to 70°C in an inert atmosphere of nitrogen or argon. That is, primary sintering may be performed.

Particles of nickel-cobalt-manganese hydroxide are produced by the above-described process, and settle down in the reaction solution. The precursor having the nickel (Ni) content of 60 mol% or more in the total metal content may be prepared by controlling the concentration of the nickel containing raw material, the cobalt containing raw material and the manganese containing raw material. The settled nickel-cobalt-manganese hydroxide particles are separated by the common method and dried to obtain a nickel-cobalt-manganese precursor. The precursor may be a secondary particle formed by agglomeration of primary particles.

Subsequently, the above-described precursor is mixed with a lithium raw material and sintered.

The lithium raw material may include, without limitation, any type of material that dissolves in water, and may include, for example, lithium containing sulfate, nitrate, acetate, carbonate, oxalate, citrate, halide, hydroxide or oxyhydroxide. Specifically, the lithium raw material may include at least one of Li₂CO₃, LiNO₃, LiNO₂, LiOH, LiOH · H₂O, LiH, LiF, LiCl, LiBr, LiI, CH₃COOLi, Li₂O, Li₂SO₄, CH₃COOLi, or Li₃C₆H₅O₇.

In the case of high-Ni NCM-based lithium composite transition metal oxide having the nickel (Ni) content of 80 mol% or more, the sintering may be performed at 700 to 1,000°C, more preferably 780 to 980°C, and even more preferably 780 to 900°C. The primary sintering may be performed in an air or oxygen atmosphere, and may be performed for 10 to 35 hours.

After the sintering, secondary sintering may be optionally performed.

In the case of high-Ni NCM-based lithium composite transition metal oxide having the nickel (Ni) content of 60 mol% or more, particularly 80 mol% or more, the secondary sintering may be performed at 650 to 800°C, more preferably 700 to 800°C, and even more preferably 700 to 750°C. The secondary sintering may be performed in an air or oxygen atmosphere, and the secondary sintering may be performed with an addition of cobalt oxide or cobalt hydroxide of 0-20,000 ppm.

The positive electrode active material may be prepared in the form of a secondary particle having a predetermined average particle size range formed by agglomeration of primary macro particles having a predetermined average particle size range according to the above-described process by controlling the mole ratio of lithium and transition metal and the sintering temperature.

Subsequently, an oxide of at least one type of metal selected from the group consisting of manganese, nickel, vanadium and cobalt is mixed with the secondary particle and sintered to form a coating layer of lithium-metal oxide on the surface of the secondary particle by the reaction between lithium impurities contained on the surface of the secondary particle and the metal oxide (step S2).

Here, the secondary particle used in the step S2 does not include a washing process. That is, there is no washing process between the steps S1 and S2.

The metal oxide that is mixed with the secondary particle may include at least one selected from the group consisting of Mn₃O₄, Mn₂O₃, MnO₂, NiO, NiO₂, V₂O₅, VO₂, Co₂O₃ and Co₃O₄. In particular, the metal oxide may include at least one selected from the group consisting of Mn₃O₄ and Co₃O₄.

When the metal oxide is mixed, for example, in an amount corresponding to the equivalence ratio of lithium impurities remaining on the surface of the secondary particle and sintered, for example, at 350 to 700°C for 2 to 10 hours, the coating layer of lithium-metal oxide is formed on the surface of the secondary particle by the reaction between the lithium impurities remaining on the surface of the secondary particle and the metal oxide.

The amount of the metal oxide mixed in the step S2 may be 0.1 to 10 parts by weight, and more specifically 0.5 to 10 parts by weight, based on 100 parts by weight of the primary particles.

### Positive electrode and lithium secondary battery

Also described herein is a positive electrode for a lithium secondary battery comprising the positive electrode active material, and a lithium secondary battery.

Specifically, the positive electrode comprises a positive electrode current collector and a positive electrode active material layer comprising the above-described positive electrode active material of the present disclosure, formed on the positive electrode current collector.

In the positive electrode, the positive electrode current collector is not limited to a particular type and may include any type of material having conductive properties without causing any chemical change to the battery, for example, stainless steel, aluminum, nickel, titanium, sintered carbon or aluminum or stainless steel treated with carbon, nickel, titanium or silver on the surface. Additionally, in general, the positive electrode current collector may be 3 to 500 µm in thickness, and may have microtexture on the surface to improve the adhesion strength of the positive electrode active material. For example, the positive electrode current collector may come in various forms, for example, films, sheets, foils, nets, porous bodies, foams and non-woven fabrics.

In addition to the above-described positive electrode active material, the positive electrode active material layer may further comprise a positive electrode active material in the form of a macro monolith or a secondary particle formed by agglomeration of primary micro particles, and may comprise a conductive material and a binder.

In this instance, the conductive material is used to impart conductivity to the electrode, and may include, without limitation, any type of conductive material having the ability to conduct electrons without causing any chemical change to the battery. Specific examples of the conductive material may include at least one of graphite, for example, natural graphite or artificial graphite; carbon-based materials, for example, carbon black, acetylene black, ketjen black, channel black, furnace black, lamp black, thermal black and carbon fibers; metal powder or metal fibers, for example, copper, nickel, aluminum and silver; conductive whiskers, for example, zinc oxide and potassium titanate; conductive metal oxide, for example, titanium oxide; or conductive polymers, for example, polyphenylene derivatives. In general, the conductive material may be included in an amount of 1 to 30 weight% based on the total weight of the positive electrode active material layer.

Additionally, the binder serves to improve the bonds between the positive electrode active material particles and the adhesion strength between the positive electrode active material and the positive electrode current collector. Specific examples of the binder may include at least one of polyvinylidene fluoride (PVDF), polyvinylidene fluoride-hexafluoropropylene copolymer (PVDF-co-HFP), polyvinylalcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or a variety of copolymers thereof. The binder may be included in an amount of 1 to 30 weight% based on the total weight of the positive electrode active material layer.

The positive electrode may be manufactured by the commonly used positive electrode manufacturing method except using the above-described positive electrode active material. Specifically, the positive electrode may be manufactured by coating a positive electrode active material layer forming composition comprising the positive electrode active material and optionally, the binder and the conductive material on the positive electrode current collector, drying and rolling. In this instance, the type and amount of the positive electrode active material, the binder and the conductive material may be the same as described above.

The solvent may include solvents commonly used in the corresponding technical field, for example, at least one of dimethyl sulfoxide (DMSO), isopropyl alcohol, N-methylpyrrolidone (NMP), acetone or water. The solvent may be used in such an amount to have sufficient viscosity for good thickness uniformity when dissolving or dispersing the positive electrode active material, the conductive material and the binder and coating to manufacture the positive electrode in view of the slurry coating thickness and the production yield.

Alternatively, the positive electrode may be manufactured by casting the positive electrode active material layer forming composition on a support, peeling off a film from the support and laminating the film on the positive electrode current collector.

According to still another embodiment of the present disclosure, there is provided an electrochemical device comprising the positive electrode. Specifically, the **electrochemical** device may include a battery or a capacitor, and more specifically, a lithium secondary battery.

Specifically, the lithium secondary battery comprises a positive electrode, a negative electrode disposed opposite the positive electrode, a separator interposed between the positive electrode and the negative electrode and an electrolyte, and the positive electrode is the same as described above. Additionally, optionally, the lithium secondary battery may further comprise a battery case in which an electrode assembly comprising the positive electrode, the negative electrode and the separator is received, and a sealing member to seal up the battery case.

**In** the lithium secondary battery, the negative electrode comprises a negative electrode current collector and a negative electrode active material layer positioned on the negative electrode current collector.

The negative electrode current collector may include any type of material having high conductivity without causing any chemical change to the battery, for example, copper, stainless steel, aluminum, nickel, titanium, sintered carbon, copper or stainless steel treated with carbon, nickel, titanium or silver on the surface and an aluminum-cadmium alloy, but is not limited thereto. Additionally, in general, the negative electrode current collector may be 3 to 500 µm in thickness, and in the same way as the positive electrode current collector, the negative electrode current collector may have microtexture on the surface to improve the bonding strength of the negative electrode active material. For example, the negative electrode current collector may come in various forms, for example, films, sheets, foils, nets, porous bodies, foams and non-woven fabrics.

In addition to the negative electrode active material, the negative electrode active material layer optionally comprises a binder and a conductive material. For example, the negative electrode active material layer may be formed by coating a negative electrode forming composition comprising the negative electrode active material, and optionally a binder and a conductive material on the negative electrode current collector and drying, or by casting the negative electrode forming composition on a support, peeling off a film from the support and laminating the film on the negative electrode current collector.

The negative electrode active material may include compounds capable of reversibly intercalating and deintercalating lithium. Specific examples of the negative electrode active material may include at least one of a carbonaceous material, for example, artificial graphite, natural graphite, graphitizing carbon fibers, amorphous carbon; a metallic compound that can form alloys with lithium, for example, Si, Al, Sn, Pb, Zn, Bi, In, Mg, Ga, Cd, Si alloy, Sn alloy or Al alloy; metal oxide capable of doping and undoping lithium such as SiOβ (0 < β < 2), SnO₂, vanadium oxide, lithium vanadium oxide; or a complex comprising the metallic compound and the carbonaceous material such as a Si-C complex or a Sn-C complex. Additionally, a metal lithium thin film may be used for the negative electrode active material. Additionally, the carbon material may include low crystalline carbon and high crystalline carbon. The low crystalline carbon typically includes soft carbon and hard carbon, and the high crystalline carbon typically includes high temperature sintered carbon, for example, amorphous, platy, flaky, spherical or fibrous natural graphite or artificial graphite, Kish graphite, pyrolytic carbon, mesophase pitch based carbon fiber, meso-carbon microbeads, mesophase pitches and petroleum or coal tar pitch derived cokes.

Additionally, the binder and the conductive material may be the same as those of the above-described positive electrode.

Meanwhile, in the lithium secondary battery, the separator separates the negative electrode from the positive electrode and provides a passage for movement of lithium ions, and may include, without limitation, any separator commonly used in lithium secondary batteries, and in particular, preferably the separator may have low resistance to the electrolyte ion movement and good electrolyte solution wettability. Specifically, the separator may include, for example, a porous polymer film made of polyolefin-based polymer such as ethylene homopolymer, propylene homopolymer, ethylene/butene copolymer, ethylene/hexene copolymer and ethylene/methacrylate copolymer or a stack of two or more porous polymer films. Additionally, the separator may include common porous non-woven fabrics, for example, nonwoven fabrics made of high melting point glass fibers and polyethylene terephthalate fibers. Additionally, to ensure the heat resistance or mechanical strength, the coated separator comprising ceramics or polymer materials may be used, and may be selectively used with a single layer or multilayer structure.

Additionally, the electrolyte used in the present disclosure may include an organic liquid electrolyte, an inorganic liquid electrolyte, a solid polymer electrolyte, a gel polymer electrolyte, a solid inorganic electrolyte and a molten inorganic electrolyte, available in the manufacture of lithium secondary batteries, but is not limited thereto.

Specifically, the electrolyte may comprise an organic solvent and a lithium salt.

The organic solvent may include, without limitation, any type of organic solvent that acts as a medium for the movement of ions involved in the electrochemical reaction of the battery. Specifically, the organic solvent may include an ester-based solvent, for example, methyl acetate, ethyl acetate, γ-butyrolactone, ε-caprolactone; an ether-based solvent, for example, dibutyl ether or tetrahydrofuran; a ketone-based solvent, for example, cyclohexanone; an aromatic hydrocarbon-based solvent, for example, benzene, fluorobenzene; a carbonate-based solvent, for example, dimethylcarbonate (DMC), diethylcarbonate (DEC), methylethylcarbonate (MEC), ethylmethylcarbonate (EMC), ethylene carbonate (EC), propylene carbonate (PC); an alcohol-based solvent, for example, ethylalcohol, isopropyl alcohol; nitriles of R-CN (R is C2 to C20 straight-chain, branchedchain or cyclic hydrocarbon, and may comprise an exocyclic double bond or ether bond); amides, for example, dimethylformamide; dioxolanes, for example, 1,3-dioxolane; or sulfolanes. Among them, the carbonate-based solvent is desirable, and more preferably, cyclic carbonate (for example, ethylene carbonate or propylene carbonate) having high ionic conductivity and high dielectric constant which contributes to the improved charge/discharge performance of the battery may be mixed with a linear carbonate-based compound (for example, ethylmethyl carbonate, dimethyl carbonate or diethyl carbonate) of low viscosity. In this case, the cyclic carbonate and the chain carbonate may be mixed at a volume ratio of about 1:1 to about 1:9 to improve the performance of the electrolyte solution.

The lithium salt may include, without limitation, any compound that can provide lithium ions used in lithium secondary batteries. Specifically, the lithium salt may include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt may range from 0.1 to 2.0M. When the concentration of the lithium salt is included in the above-described range, the electrolyte has the optimal conductivity and viscosity, resulting in good performance of the electrolyte and effective movement of lithium ions.

In addition to the above-described constituent substances of the electrolyte, the electrolyte may further comprise, for example, at least one type of additive of a haloalkylene carbonate-based compound such as difluoro ethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride to improve the life characteristics of the battery, prevent the capacity fading of the battery and improve the discharge capacity of the battery. In this instance, the additive may be included in an amount of 0.1 to 5 weight% based on the total weight of the electrolyte.

The lithium secondary battery comprising the positive electrode active material according to the present disclosure is useful in the field of mobile devices including mobile phones, laptop computers and digital cameras, and electric vehicles including hybrid electric vehicles (HEVs).

Accordingly, according to another embodiment of the present disclosure, there are provided a battery module comprising the lithium secondary battery as a unit cell and a battery pack comprising the same.

The battery module or the battery pack may be used as a power source of at least one medium-large scale device of power tools; electric vehicles comprising electric vehicles (EVs), hybrid electric vehicles, and plug-in hybrid electric vehicles (PHEVs); or energy storage systems.

Hereinafter, the embodiments of the present disclosure will be described in sufficiently detail for those having ordinary skill in the technical field pertaining to the present disclosure to easily practice the present disclosure.

### Example 1.

### Preparation of secondary particle

4 liters of distilled water is put into a coprecipitation reactor (capacity 20L), and while the temperature is maintained at 50°C, 100 mL of 28 weight% ammonia aqueous solution is added, and a transition metal solution with the concentration of 3.2mol/L in which NiSO₄, CoSO₄, MnSO₄ are mixed at a mole ratio of nickel:cobalt:manganese of 0.80:0.1:0.1 and 28 weight% ammonia aqueous solution are continuously put into the reactor at 300 mL/hr through a supply device and at 42 mL/hr through a separate supply device, respectively. Stirring is performed at the impeller speed of 400 rpm, and 40 wt% sodium hydroxide solution is fed through a separate supply device to maintain the pH at 9. Precursor particles are formed by 10-hour coprecipitation reaction.

The Ni_{0.8}Co_{0.1}Mn_{0.1}(OH)₂ positive electrode active material precursor synthesized through coprecipitation reaction is mixed with a lithium raw material LiOH such that the final Li/Me(Ni,Co,Mn) mole ratio is 1.05, followed by sintering at 800°C for 10 hours under an oxygen atmosphere to prepare a positive electrode active material represented by LiNi_{0.8}Co_{0.1}Mn_{0.1}O₂.

### Formation of coating layer

The secondary particle obtained by the above-described method is mixed with metal oxide Mn₃O₄ as a coating source in an amount of 1 part by weight based on 100 parts by weight of the secondary particle according to the equivalence ratio, followed by sintering at 500°C for 5 hours to form a coating layer.

### Example 2

The same process as example 1 is performed except that the amount of the coating source is changed to the amount of the following Table 1.

### Example 3

The same process as example 1 is performed except that the type and amount of the coating source is changed to the metal oxide and the amount of the following Table 1.

### Example 4

The same process as example 1 is performed except that the type and amount of the coating source is changed to the metal oxide and the amount of the following Table 1.

### Comparative example 1

The same process as example 1 is performed except that the coating layer is not formed.

### Comparative example 2

The same process as example 1 is performed except that the coating layer is not formed and the prepared secondary particle is washed.

### Comparative example 3

The same process as example 1 is performed except that the coating layer is formed after washing the prepared positive electrode active material.

### Comparative example 4

The same process as example 1 is performed except that the type and amount of the coating source is changed to the metal oxide and the amount of the following Table 1, and the coating layer is formed after washing the prepared positive electrode active material.

### Comparative example 5

4 liters of distilled water is put into a coprecipitation reactor (capacity 20L), and while the temperature is maintained at 50°C, 100 mL of 28 weight% ammonia aqueous solution is added, and a transition metal solution with the concentration of 3.2 mol/L in which NiSO₄, CoSO₄, MnSO₄ are mixed at a mole ratio of nickel:cobalt:manganese of 0.80:0.1:0.1 and 28 weight% ammonia aqueous solution are continuously put into the reactor at 300 mL/hr through a supply device and at 42 mL/hr through a separate supply device, respectively. Stirring is performed at the impeller speed of 400 rpm, and 40 wt% sodium hydroxide solution is fed through a separate supply device to maintain the pH at 9. Precursor particles are formed by 10-hour coprecipitation reaction. The precursor particles are separated, washed and dried in an oven of 130°C.

The Ni_{0.8}Co_{0.1}Mn_{0.1}(OH)₂ positive electrode active material precursor synthesized through coprecipitation reaction is mixed with a lithium raw material LiOH such that the final Li/Me(Ni,Co,Mn) mole ratio is 1.05, followed by sintering at 700°C for 10 hours under an oxygen atmosphere to prepare a positive electrode active material represented by LiNi_{0.8}Co_{0.1}Mn_{0.1}O₂.

A coating layer is formed on the secondary particle prepared by the above-described method by the same method as example 1 except that the coating source described in Table 1 are used.

### [Experimental example 1: Observation of positive electrode active material]

An image of the positive electrode active material of example 1 observed with magnification using a scanning electron microscope (SEM) is shown in FIG. 1.

### [Experimental example 2: Average particle size]

D50 may be defined as a particle size at 50% of particle size distribution, and is measured using a laser diffraction method.

### [Experimental example 3: Crystal size of primary particle]

The sample is measured using Bruker Endeavor (Cu Kα, λ= 1.54 °Å) equipped with LynxEye XE-T position sensitive detector with the step size of 0.02° in the scan range of FDS 0.5°, 2-theta 15° to 90°, to make the total scan time of 20 min.

Rietveld refinement of the measured data is performed, considering the charge at each site (metals at transition metal site +3, Ni at Li site +2) and cation mixing. In crystal size analysis, instrumental broadening is considered using Fundamental Parameter Approach (FPA) implemented in Bruker TOPAS program, and in fitting, all peaks in the measurement range are used. The peak shape fitting is only performed using Lorentzian contribution to First Principle (FP) among peak types available in TOPAS, and in this instance, strain is not considered.

### [Experimental example 4. Measurement of lithium impurity content]

To measure the amount of Li impurities present on the positive electrode active materials obtained in example and comparative example, pH titration is performed. For the pH meter, Metrohm is used, and after titration per 1 mL, pH is recorded. Specifically, the amount of lithium by-products on the surface of the positive electrode active material is measured by pH titration with 0.1N HCl using the Metrohm ph meter.

### [Experimental example 5. Resistance characteristics at SOC 5]

Positive electrodes are manufactured using the positive electrode active materials according to example and comparative example, and the capacity retention is measured by the following method. A mixture of artificial graphite and natural graphite at a mix ratio of 5:5 as a negative electrode active material, superC as a conductive material and SBR/CMC as a binder are mixed at a weight ratio of 96:1:3 to prepare a negative electrode slurry, and the negative electrode slurry is coated on one surface of a copper current collector, dried at 130°C and rolled to the porosity of 30% to manufacture a negative electrode.

An electrode assembly including the positive electrode and the negative electrode manufactured as described above and a porous polyethylene separator between the positive electrode and the negative electrode is made and placed in a case, and an electrolyte solution is injected into the case to manufacture a lithium secondary battery.

In this instance, the electrolyte solution is prepared by dissolving 1.0M lithiumhexafluorophosphate (LiPF₆) in an organic solvent comprising ethylenecarbonate/ethylmethylcarbonate/diethylcarbonate/(a mix volume ratio of EC/EMC/DEC=3/4/3).

The manufactured lithium secondary battery full cell is charged at 1/3C, 25°C in CC-CV mode until 4.2V, and discharged at a constant current of 1/3C until 3.0V, SOC5 is set on the capacity basis and the resistance is measured at 10 sec when discharged at 2.5C, SOC5.

The characteristics and resistance characteristics of the positive electrode active materials according to example and comparative example are shown in the following Table 1.

**[Table 1]**

| | Li impurity content (wt%) | Average particle size (D50) of secondar y particle (µm) | Average particle size (D50) of primary particle (µm) | Average crystal size of primary particle (nm) | Washing | Coating source | Coating source content | SOC 5 resistanc e (Ohm) |
|---|---|---|---|---|---|---|---|---|
| Example 1 | 0.15 | 4 | 1 | 230 | Nonwashing | Mn₃O₄ | 1 wt% | 2.49 |
| Example 2 | 0.09 | 4 | 1 | 225 | Nonwashing | Mn₃O₄ | 5 wt% | 3.05 |
| Example 3 | 0.18 | 4 | 1 | 230 | Non-washing | Co₃O₄ | 1 wt% | 2.15 |
| Example 4 | 0.12 | 4 | 1 | 215 | Non-washing | Co₃O₄ | 5 wt% | 2.65 |
| Compar ative example 1 | 0.68 | 4 | 1 | 220 | Non-washing | X | X | 8.15 |
| Compar ative example 2 | 0.08 | 4 | 1 | 230 | Washing | X | X | 7.17 |
| Compar ative example 3 | 0.45 | 4 | 1 | 225 | Washing | Mn₃O₄ | 1 wt% | 9.5 |
| Comparative example 4 | 0.56 | 4 | 1 | 215 | Washing | Co₃O₄ | 5 wt% | 10.65 |
| Compar ative example 5 | 0.48 | 4 | 0.01 | 116 | Non-washing | Co₃O₄ | 1 wt% | 9.29 |

Referring to the results of Table 1, the positive electrode active material of comparative example 1 without forming the coating layer has high lithium impurity content, and the positive electrode active material of comparative example 2 with washing and without forming the coating layer has lower lithium impurity content, but has an increase in resistance due to the washing process. Comparative examples 3 and 4 including forming the coating layer after washing the secondary particle have an increase in lithium impurity content in the sintering process for forming the coating layer. Meanwhile, the positive electrode active material of comparative example 5 using the secondary particle formed by agglomeration of primary micro particles shows lithium impurity content of a predetermined level or above even after the coating layer is formed due to the increased specific surface area.

## Claims

1. A method for preparing a positive electrode active material for a lithium secondary battery, comprising:
(S1) preparing a secondary particle having an average particle size D50 of 2 to 8 µm formed by agglomeration of at least two primary macro particles represented by LiₐNi_{1-b-c-d}Co_{b}Mn_{c}Q₄O_{2+δ} wherein 1.0≤a≤1.5, 0<b<0.2, 0<c<0.2, 0≤d≤0.1, 0<b+c+d≤0.2, - 0.1≤δ≤1.0, and Q is at least one type of metal selected from the group consisting of Al, Mg, V, Ti and Zr, and having an average particle size D50 of 0.5 to 3 µm and wherein an average crystal size of the primary macro particle is equal to or larger than 200 nm; and
(S2) mixing the secondary particle with an oxide of at least one type of metal selected from the group consisting of manganese, nickel, vanadium and cobalt and sintering to form a coating layer of lithium-metal oxide on a surface of the secondary particle by reaction between lithium impurities contained on a surface of the secondary particle and the metal oxide,
wherein the method does not comprise a washing process between the steps (S1) and (S2), and
the positive electrode active material for a lithium secondary battery comprises:
a secondary particle having an average particle size D50 of 2 to 8 µm formed by agglomeration of at least two primary macro particles having an average particle size D50 of 0.5 to 3 µm and an average crystal size of the primary macro particle is equal to or larger than 200 nm; and
a coating layer of lithium-metal oxide formed on a surface of the secondary particle,
wherein the primary macro particle is represented by LiₐNi_{1-b-c-d}Co_{b}Mn_{c}Q_{d}O_{2+δ} wherein 1.0≤a≤1.5, 0<b<0.2, 0<c<0.2, 0≤d≤0.1, 0<b+c+d≤0.2, -0.1≤δ≤1.0, and Q is at least one type of metal selected from the group consisting of Al, Mg, V, Ti and Zr,
a metal of the lithium-metal oxide is at least one type of metal selected from the group consisting of manganese, nickel, vanadium and cobalt, and
an amount of lithium impurities is 0.25 weight% or less as determined according to the description.

2. The method for preparing a positive electrode active material for a lithium secondary battery according to claim 1, wherein the metal oxide is at least one selected from the group consisting of Mn₃O₄, Mn₂O₃, MnO₂, NiO, NiO₂, V₂O₅, VO₂, Co₂O₃ and Co₃O₄.

3. The method for preparing a positive electrode active material for a lithium secondary battery according to claim 1, wherein the metal oxide is at least one selected from the group consisting of Mn₃O₄ and Co₃O₄.

4. The method for preparing a positive electrode active material for a lithium secondary battery according to claim 1, wherein an amount of the metal oxide mixed in the step (S2) is 0.1 to 10 parts by weight based on 100 parts by weight of the primary macro particles.

## Patentansprüche

1. Verfahren zur Herstellung eines Positivelektrodenaktivmaterials für eine Lithium-Sekundärbatterie, umfassend:
(S1) Herstellen eines Sekundärpartikels mit einer durchschnittlichen Partikelgröße D50 von 2 bis 8 µm, gebildet durch Agglomeration von mindestens zwei Primärmakropartikeln, die durch LiₐNi_{1-b-c-d}Co_{b}Mn_{c}Q_{d}O_{2+δ} dargestellt sind, worin 1,0≤a≤1,5, 0<b<0,2, 0<c<0,2, 0≤d≤0,1, 0<b+c+d≤0,2, -0,1≤δ≤1,0, und Q mindestens eine Metallart ist, ausgewählt aus der Gruppe bestehend aus Al, Mg, V, Ti und Zr, und die eine durchschnittlichen Partikelgröße D50 von 0,5 bis 3 µm aufweisen, wobei eine durchschnittliche Kristallgröße des Primärmakropartikels gleich oder größer als 200 nm ist; und
(S2) Mischen des Sekundärpartikels mit einem Oxid mindestens einer Metallart, ausgewählt aus der Gruppe bestehend aus Mangan, Nickel, Vanadium und Kobalt, und Sintern, um eine Beschichtungsschicht aus Lithiummetalloxid auf einer Oberfläche des Sekundärpartikels durch Reaktion zwischen Lithiumverunreinigungen, die auf einer Oberfläche des Sekundärpartikels enthalten sind, und dem Metalloxid zu bilden,
wobei das Verfahren kein Waschverfahren zwischen den Schritten (S1) und (S2) umfasst, und
das Positivelektrodenaktivmaterial für eine Lithium-Sekundärbatterie folgendes umfasst:
ein Sekundärpartikel mit einer durchschnittlichen Partikelgröße D50 von 2 bis 8 µm, gebildet durch Agglomeration von mindestens zwei Primärmakropartikeln mit einer durchschnittlichen Partikelgröße D50 von 0,5 bis 3 µm, wobei eine durchschnittliche Kristallgröße des Primärmakropartikels gleich oder größer als 200 nm ist; und
eine Beschichtungsschicht aus Lithiummetalloxid, die auf einer Oberfläche des Sekundärpartikels gebildet ist,
wobei der Primärmakropartikel durch LiₐNi_{1-b-c-d}Co_{b}Mn_{c}Q_{d}O_{2+δ} dargestellt ist, worin 1,0≤a≤1,5, 0<b<0,2, 0<c<0,2, 0≤d≤0,1, 0<b+c+d≤0,2, -0,1≤δ≤1,0, und Q mindestens eine Metallart ist, ausgewählt aus der Gruppe bestehend aus Al, Mg, V, Ti und Zr,
ein Metall des Lithiummetalloxids mindestens eine Metallart ist, ausgewählt aus der Gruppe bestehend aus Mangan, Nickel, Vanadium und Kobalt, und
eine Menge an Lithiumverunreinigungen 0,25 Gew.-% oder weniger beträgt, wie gemäß der Beschreibung bestimmt.

2. Verfahren zur Herstellung eines Positivelektrodenaktivmaterials für eine Lithium-Sekundärbatterie gemäß Anspruch 1, bei dem das Metalloxid mindestens eines ist, ausgewählt aus der Gruppe bestehend aus Mn₃O₄, Mn₂O₃, MnO₂, NiO, NiO₂, V₂O₅, VO₂, Co₂O₃ und Co₃O₄.

3. Verfahren zur Herstellung eines Positivelektrodenaktivmaterials für eine Lithium-Sekundärbatterie gemäß Anspruch 1, bei dem das Metalloxid mindestens eines ist, ausgewählt aus der Gruppe bestehend aus Mn₃O₄ and Co₃O₄.

4. Verfahren zur Herstellung eines Positivelektrodenaktivmaterials für eine Lithium-Sekundärbatterie gemäß Anspruch 1, bei dem die Menge des in Schritt (S2) beigemischten Metalloxids 0,1 bis 10 Gewichtsteile, bezogen auf 100 Gewichtsteile der Primärmakropartikel, beträgt.

## Revendications

1. Procédé de préparation d'un matériau actif d'électrode positive de batterie secondaire au lithium, comprenant :
(S1) la préparation d'une particule secondaire présentant une taille de particule moyenne D50 de 2 µm à 8 µm formée par agglomération d'au moins deux macroparticules primaires représentées par LiaNi_{1-b-c-d}Co_{b}Mn_{c}Q_{d}O_{2+δ} dans lequel
1,0 ≤ a ≤ 1,5, 0 < b < 0,2, 0 < c < 0,2, 0 ≤ d ≤ 0,1, 0 < b + c + d ≤ 0,2, -0,1 ≤ δ ≤ 1,0, et Q est au moins un type de métal sélectionné dans le groupe consistant en Al, Mg, V, Ti et Zr, et présentant une taille de particule moyenne D50 de 0,5 µm à 3 µm et dans lequel une taille de cristal moyenne de la macroparticule primaire est égale ou supérieure à 200 nm ; et
(S2) le mélange de la particule secondaire avec un oxyde d'au moins un type de métal sélectionné dans le groupe consistant en manganèse, nickel, vanadium et cobalt et le frittage pour former une couche de revêtement d'oxyde métallique de lithium sur une surface de la particule secondaire par réaction entre des impuretés de lithium contenues sur une surface de la particule secondaire et l'oxyde métallique,
dans lequel le procédé ne comprend pas un processus de lavage entre les étapes (S1) et (S2), et
le matériau actif d'électrode positive de batterie secondaire au lithium comprend :
une particule secondaire présentant une taille de particule moyenne D50 de 2 µm à 8 µm formée par agglomération d'au moins deux macroparticules primaires présentant une taille de particule moyenne D50 de 0,5 µm à 3 µm et une taille de cristal moyenne de la macroparticule primaire est égale ou supérieure à 200 nm ; et
une couche de revêtement d'oxyde métallique de lithium formée sur une surface de la particule secondaire,
dans lequel la macroparticule primaire est représentée par LiₐN_{1-b-c-d}Co_{b}Mn_{c}Q_{d}O_{2+δ} dans lequel 1,0 ≤ a ≤ 1,5, 0 < b < 0,2, 0 < c < 0,2, 0 ≤ δ ≤ 0,1, 0 < b + c + d ≤ 0,2, -0,1 ≤ δ ≤ 1,0, et Q est au moins un type de métal sélectionné dans le groupe consistant en Al, Mg, V, Ti et Zr,
un métal de l'oxyde métallique de lithium est au moins un type de métal sélectionné dans le groupe consistant en manganèse, nickel, vanadium et cobalt, et
une quantité d'impuretés de lithium est 0,25 % en poids ou moins telle que déterminée selon la description.

2. Procédé de préparation d'un matériau actif d'électrode positive de batterie secondaire au lithium selon la revendication 1, dans lequel l'oxyde métallique est au moins un sélectionné dans le groupe consistant en Mn₃O₄, Mn₂O₃, MnO₂, NiO, NiO₂, V₂O₅, VO₂, Co₂O₃ et Co₃O₄.

3. Procédé de préparation d'un matériau actif d'électrode positive de batterie secondaire au lithium selon la revendication 1, dans lequel l'oxyde métallique est au moins un sélectionné dans le groupe consistant en Mn₃O₄ et Co₃O₄.

4. Procédé de préparation d'un matériau actif d'électrode positive de batterie secondaire au lithium selon la revendication 1, dans lequel une quantité de l'oxyde métallique mélangé dans l'étape (S2) est 0,1 partie en poids à 10 parties en poids sur la base de 100 parties en poids des macroparticules primaires.
